Europäisches Patentamt

(19) European Patent Office

Office européen des brevets

(11) Veröffentlichungsnummer: **0 088 310**
**B1**

(12) # EUROPÄISCHE PATENTSCHRIFT

(45) Veröffentlichungstag der Patentschrift:
**17.09.86**

(51) Int. Cl.⁴: **H 04 L 11/00,** H 04 L 11/10

(21) Anmeldenummer: **83101874.2**

(22) Anmeldetag: **25.02.83**

(54) **Verfahren zum Ermitteln der Dauer des Bestehens einer Verbindung zwischen Teilnehmerstellen einer Datenvermittlungsanlage.**

(30) Priorität: **01.03.82 DE 3207265**

(43) Veröffentlichungstag der Anmeldung:
**14.09.83 Patentblatt 83/37**

(45) Bekanntmachung des Hinweises auf die Patenterteilung:
**17.09.86 Patentblatt 86/38**

(84) Benannte Vertragsstaaten:
**AT CH DE GB IT LI**

(56) Entgegenhaltungen:
**EP - A - 0 017 035**

**PHILIPS TELECOMMUNICATION REVIEW, Band 39, Nr. 2, 2. Juni 1981, Seiten 49-62, Hilversum, NL, F.T.A. VAN BERGEN et al.: "A teletex-telex converter"**

(73) Patentinhaber: **Siemens Aktiengesellschaft Berlin und München, Wittelsbacherplatz 2, D-8000 München 2 (DE)**

(72) Erfinder: **Franz, Dietmar, Edelweissstrasse 66, D-8039 Puchheim (DE)**
Erfinder: **Torggler, Norbert, Dipl.-Ing., Bellinzonastrasse 7, D-8000 München 71 (DE)**

## Beschreibung

Die Erfindung bezieht sich auf ein Verfahren zum Ermitteln der Dauer des Bestehens einer Verbindung zwischen Datensignale mit voneinander verschiedenen Datenübertragungsprozeduren abgebenden bzw. aufnehmenden Teilnehmerstellen einer Datenvermittlungsanlage, wobei die betreffenden Teilnehmerstellen über einen ebenfalls an der Datenvermittlungsanlage angeschlossenen Signalumsetzer dadurch miteinander verbunden werden, dass zunächst während einer zwischen der einen Teilnehmerstelle und dem Signalumsetzer aufgebauten Verbindung die zu übertragenden Datensignale in diesen Signalumsetzer eingespeichert werden und dass anschliessend nach einer entsprechenden Umsetzung die im Signalumsetzer gespeicherten Datensignale von diesem über die Datenvermittlungsanlage an die andere Teilnehmerstelle weitergeleitet werden.

Es ist bereits eine als Signalumsetzer zu bezeichnende Schaltungsanordnung zur Übertragung von Datensignalen zwischen entsprechend einer ersten Übertragungsprozedur arbeitenden Teilnehmerstellen und entsprechend einer von der ersten Übertragungsprozedur verschiedenen zweiten Übertragungsprozedur arbeitenden Teilnehmerstellen über eine Datenvermittlungsstelle bekannt (DE-PS 2 912 649). Bei dieser bekannten Schaltungsanordnung ist eine Anzahl von Umsetzeinrichtungen vorgesehen, die an zu zwei verschiedenen Gruppen von Anschlussschaltungen gehörenden Anschlussschaltungen der Datenvermittlungsstelle angeschlossen sind. Im Zuge einer Verbindung zwischen einer mit der ersten Übertragungsprozedur arbeitenden Teilnehmerstelle und einer mit der zweiten Übertragungsprozedur arbeitenden Teilnehmerstelle wird eine derartige Umsetzeinrichtung für die Ausführung der erforderlichen Umsetzvorgänge benutzt.

Bei der bekannten Schaltungsanordnung setzt sich eine Verbindung zwischen den genannten Teilnehmerstellen über einen derartigen Signalumsetzer aus zwei Teilverbindungen zusammen, nämlich aus einer Verbindung zwischen der mit einer ersten Übertragungsprozedur arbeitenden Teilnehmerstelle und dem Signalumsetzer sowie aus einer Verbindung zwischen dem Signalumsetzer und der mit einer zweiten Übertragungsprozedur arbeitenden Teilnehmerstelle. Zur Gebührenerfassung ist die Dauer des Bestehens der beiden Teilverbindungen zu berücksichtigen.

Die Dauer des Bestehens der Verbindung zu dem Signalumsetzer hin kann in der Datenvermittlungsstelle ermittelt werden. Die Dauer des Bestehens der Verbindung zu der mit der zweiten Übertragungsprozedur arbeitenden Teilnehmerstelle hin könnte zwar durch Multiplikation der bereits erfassten Dauer mit einer Konstanten berechnet werden, und zwar unter Berücksichtigung der unterschiedlichen Übertragungsgeschwindigkeiten.

Ein solches Vorgehen würde jedoch zu fehlerhaften Ergebnissen führen. Die Dauer des Bestehens der Verbindung zwischen einer Datensignale abgebenden Teilnehmerstelle und dem Signalumsetzer umfasst nämlich zum einen die Dauer der Übertragung dieser Datensignale und zum anderen die Dauer für die Abwicklung der erforderlichen Übertragungsprozedur sowie die Dauer für die Übertragung von Zusatzinformationen. Demgegenüber setzt sich die Dauer des Bestehens der Verbindung zwischen dem Signalumsetzer und einer für die Aufnahme der Datensignale bestimmten Teilnehmerstelle aus einer die Übertragung der Datensignale betreffenden Dauer und aus einer weiteren Dauer zusammen, die für die Abwicklung der nunmehr zu berücksichtigenden Übertragungsprozedur bzw. der nunmehr zu übertragenden Zusatzinformationen erforderlich ist. Dabei besteht zwischen der zuletzt genannten Dauer und der für die Abwicklung der Übertragungsprozedur und erforderlicher Zusatzinformation zwischen der erstgenannten Teilnehmerstelle und dem Signalumsetzer erforderlichen Dauer keine gleichbleibende Beziehung. Vielmehr ändert sich diese Beziehung in Abhängigkeit von der Anzahl der zu übertragenden Datensignale und der gegebenenfalls zu übertragenden Zusatzinformationen. Ausserdem sind bei einem solchen Vorgehen die Fälle nicht erfassbar, bei denen infolge von Übertragungsstörungen ein vorzeitiger Abbau der zu der mit der zweiten Übertragungsprozedur arbeitenden Teilnehmerstelle hin bestehenden Verbindung erforderlich ist.

Der vorliegenden Erfindung liegt nun die Aufgabe zugrunde, einen Weg zu zeigen, wie auf relativ einfache Weise die Dauer des Bestehens einer Verbindung zwischen Teilnehmerstellen der oben erwähnten Art unter Berücksichtigung einer Umsetzung der Datenübertragungsprozeduren im Zuge der Übertragung von Datensignalen zwischen solchen Teilnehmerstellen ermittelt und gegebenenfalls für eine spätere Gebührenermittlung aufgezeichnet werden kann.

Gelöst wird die vorstehend aufgezeigte Aufgabe bei einem Verfahren der eingangs genannten Art erfindungsgemäss dadurch, dass die Dauer des Bestehens einer Verbindung zwischen der jeweiligen Teilnehmerstelle und dem Signalumsetzer für die Einspeicherung von Datensignalen in den betreffenden Signalumsetzer in der Datenvermittlungsanlage ermittelt wird, dass die Dauer der für das Weiterleiten der im Signalumsetzer gespeicherten Datensignale erforderlichen Zeitspanne in dem Signalumsetzer ermittelt wird und dass nach dem vollständigen Weiterleiten der Datensignale vom Signalumsetzer an die für die Aufnahme dieser Datensignale in Frage kommende Teilnehmerstelle Angaben bezüglich der in diesem Signalumsetzer für dieses Weiterleiten ermittelten Dauer an die Datenvermittlungsanlage übertragen werden, in der aus diesen Angaben und aus den in der Datenvermittlungsanlage bereits ermittelten Angaben eine Gesamtdauer ermittelt wird.

Die Erfindung bringt den Vorteil mit sich, dass in dem Signalumsetzer gleichzeitig mit der Prozedurumsetzung die Dauer der für das Weiterleiten der im Signalumsetzer gespeicherten Datensignale erforderlichen Zeitspanne ermittelt wird, so dass hierdurch die für die Abwicklung der Vermittlungsvorgänge erforderlichen Vorgänge in der Datenvermittlungsanlage nicht beeinflusst werden.

Bei einer aus mehreren Datenvermittlungsstellen bestehenden Datenvermittlungsanlage wird die erwähnte Gesamtdauer vorzugsweise in derjenigen Datenvermittlungsstelle ermittelt, über die im Zuge der jeweiligen Verbindung zuvor Datensignale an den Signalumsetzer weitergeleitet worden sind und in der die Dauer dieses Weiterleitens ermittelt worden ist.

Zweckmässige Ausgestaltungen der Erfindung ergeben sich aus den Unteransprüchen.

Im folgenden wird die Erfindung anhand von Zeichnungen beispielsweise näher beschrieben.

Fig. 1 zeigt in einem Blockschaltbild eine Schaltungsanordnung, bei der die Erfindung angewandt ist.

Fig. 2 zeigt ein Diagramm, auf das im Zuge der Erläuterung der Erfindung eingegangen wird.

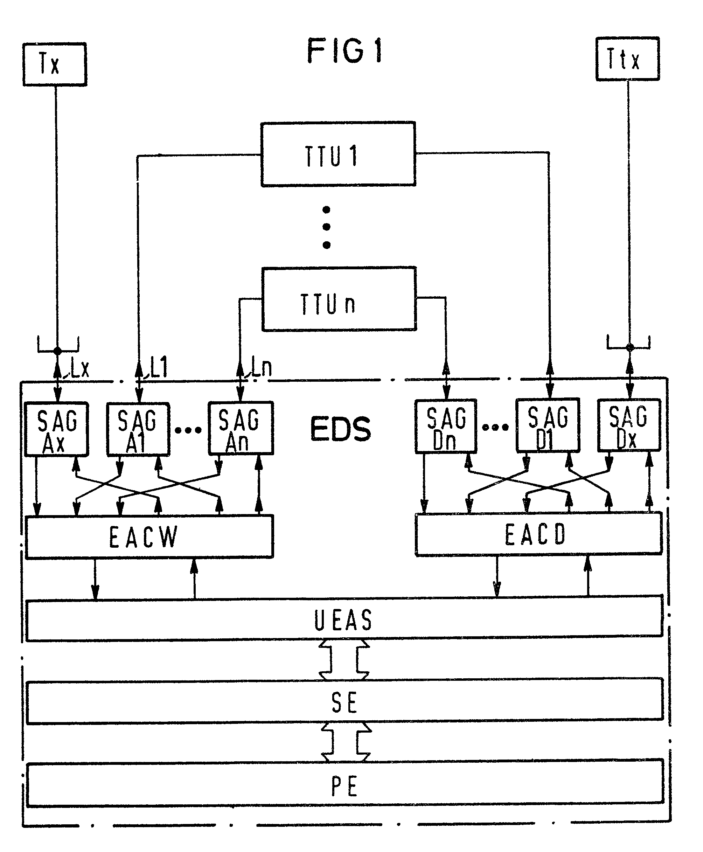

In Fig. 1 ist wie in dem eingangs genannten Patent ausschnittweise eine bekannte elektronische Datenvermittlungsstelle EDS dargestellt. Von dieser Datenvermittlungsstelle EDS sind lediglich zu einer ersten Gruppe von Anschlussschaltungen gehörende Anschlussschaltungen SAGAx, SAGA1 bis SAGAn, zu einer zweiten Gruppe von Anschlussschaltungen gehörende Anschlussschaltungen SAGDx, SAGD1 bis SAGDn, den einzelnen Gruppen von Anschlussschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlussschaltungen dienen dazu, digitale Datensignale polaritätswechselweise zu verarbeiten. Die mit dem anderen Eingabe-/Ausgabe-Codewandler EACD verbundenen Anschlussschaltungen dienen zur Verarbeitung von sogenannten Bitgruppen, das sind jeweils eine Mehrzahl von Bits, beispielsweise acht Bits, umfassende digitale Datensignale, die auch als Envelopes bezeichnet werden.

Von den in Fig. 1 angedeuteten Anschlussschaltungen sind einige der Polaritätswechsel verarbeitenden Anschlussschaltungen mit Teilnehmerstellen verbunden, welche digitale Datensignale mit einer ersten Datenübertragungsprozedur abgeben bzw. aufnehmen. Bei diesen Teilnehmerstellen mag es sich um übliche Fernschreib- bzw. Telex-Teilnehmerstellen handeln, von denen in der Zeichnung eine mit Tx angedeutet ist. Diese Telex-Teilnehmerstellen mögen mit einer Datenübertragungsrate von 50 Bd und unter Ausnutzung des internationalen Telegrafenalphabets Nr. 2 arbeiten, also mit einem Start-Stop-Datenformat. Die Telex-Teilnehmerstelle Tx ist dabei über ein beispielsweise im Halbduplexbetrieb ausgenutzte Leitung Lx an der Anschlussschaltung SAGAx angeschlossen. Ein auf dieser Leitung Lx eingetragenes Vielfachzeichen soll andeuten, dass an der betreffenden Anschlussschaltung SAGAx noch mehrere Telex-Teilnehmerstellen angeschlossen sein können.

Mit einigen der digitale Datensignale in Form von Bitgruppen bzw. Envelopes verarbeitenden Anschlussschaltungen sind Teilnehmerstellen verbunden, die digitale Nachrichtensignale mit einer zweiten Datenübertragungsprozedur abgeben bzw. aufnehmen, und zwar seriell in Form von Bitgruppen bzw. Envelopes. Bei diesen Teilnehmerstellen mag es sich um sogenannte Bürofernschreibstationen handeln, die auch als Teletex-Teilnehmerstellen bezeichnet werden. In der Zeichnung ist eine derartige Teletex-Teilnehmerstelle mit Ttx angedeutet. Diese Teletex-Teilnehmerstelle ist an der Anschlussschaltung SAGDx angeschlossen. Ein auf der betreffenden Verbindungsleitung eingezeichnetes Vielfachzeichen soll hierbei andeuten, dass an der betreffenden Anschlussschaltung SAGDx noch mehrere Teletex-Teilnehmerstellen angeschlossen sein können. Bezüglich der Teletex-Teilnehmerstellen sei angemerkt, dass diese beispielsweise seriell auftretende digitale Datensignale entsprechend dem internationalen Alphabet IA Nr. 5 mit einer Datenübertragungsrate von 2400 bit/s abgeben und aufnehmen können, und zwar als synchrone Datensignale.

Mit der in Fig. 1 dargestellten Datenvermittlungsstelle EDS ist eine Anzahl von Signalumsetzern TTU1 bis TTUn verbunden. Der Aufbau dieser Signalumsetzer ist in dem eingangs genannten Patent bereits beschrieben worden; er wird daher hier nicht näher erläutert. Der Signalumsetzer TTU1 ist über eine Leitung L1 sowohl sendeseitig als auch empfangsseitig mit der Anschlussschaltung SAGA1 verbunden. In entsprechender Weise ist der Signalumsetzer TTUn über die Leitung Ln mit der Anschlussschaltung SAGAn verbunden. Mit weiteren Signaleingängen/Signalausgängen sind die betreffenden Signalumsetzer mit den Anschlussschaltungen SAGD1 bzw. SAGDn verbunden. Über die erwähnten Verbindungsleitungen nehmen die Signalumsetzer die jeweils hinsichtlich der Übertragungsprozedur umzusetzenden digitalen Datensignale auf bzw. geben die jeweils umgesetzten digitalen Datensignale ab. Dies bedeutet, dass die Signalumsetzer, die ihnen zugeführten Telexsignale in den Teletex-Teilnehmerstellen wiedergebbare digitale Signale umsetzen und von den Teletex-Teilnehmerstellen angegebene digitale Signale in Telexsignale umsetzen.

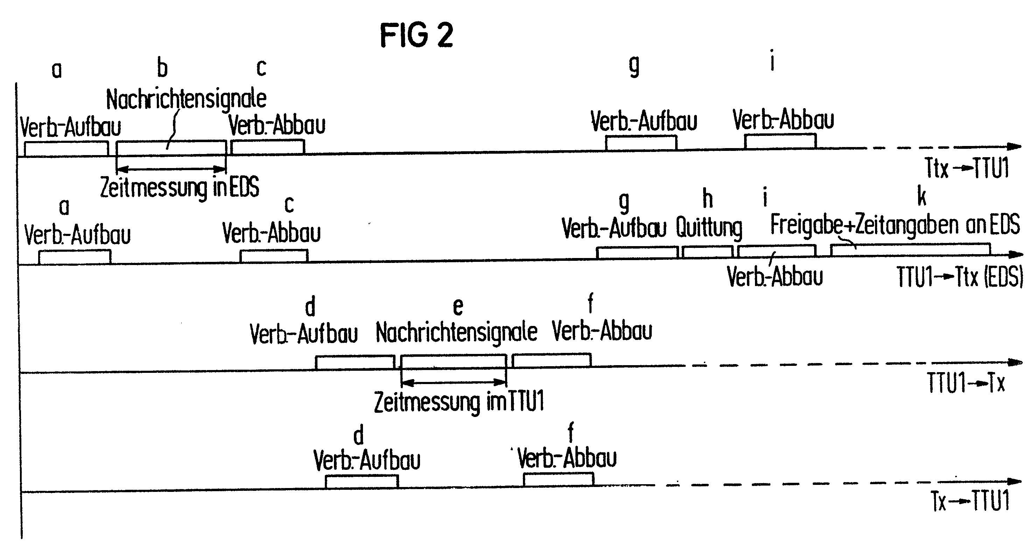

Nunmehr sei das Verfahren gemäss der Erfindung unter Bezugnahme auf die in Fig. 1 dargestellte Schaltungsanordnung und unter Heranziehung des Diagramms gemäss Fig. 2 näher erläutert. Hierzu wird zunächst beispielsweise der Fall betrachtet, dass digitale Datensignale von der Teletex-Teilnehmerstelle Ttx zu der Telex-Teilnehmerstelle Tx zu übertragen sind. Die hierzu für einen Verbindungsaufbau erforderlichen Kommunikationen zwischen der Teletex-Teilnehmerstelle Ttx und der Datenvermittlungsstelle EDS werden entsprechend der CCITT-Empfehlung X.21 durchgeführt (a in Fig. 2). Aus den im Zuge des Verbindungsaufbaues von der Teletex-Teilnehmerstelle her übertragenen Wählzeichen (Zugangskennziffern) geht hervor, dass eine Verbindung zu einer Telex-Teilnehmerstelle Tx gewünscht ist, d.h. dass eine Umsetzung der Übertragungsprozedur vorzunehmen ist. Solche Wählzeichen werden in der Datenvermittlungsstelle EDS als solche erkannt. Bei Erkennen solcher Verbindungswünsche belegt die Datenvermittlungsstelle EDS einen bis dahin freien Signalumsetzer TTU1 bis TTUn. Der Signalumsetzer TTU1 soll beispielsweise ein solcher freier Signalumsetzer sein.

Nach der Belegung des Signalumsetzers TTU1 leitet die Datenvermittlungsstelle EDS die für den weiteren Verbindungsaufbau erforderlichen Signalisierungsinformationen (z.B. Wahlinformationen) an den Signalumsetzer TTU1 weiter. Die Weiterleitung solcher Signalisierungsinformationen erfolgt dabei gemäss der CCITT-Empfehlung X.71. Nach einem erfolgten Aufbau der Verbindung zwischen dem Signalumsetzer und der Teletex-Teilnehmerstelle beginnt die Teletex-Teilnehmerstelle Ttx mit der Übertragung der Datensignale über die Datenvermittlungsstelle EDS zum Signalumsetzer TTU1 (b in Fig. 2). Gleichzeitig mit dieser Übertragung ermittelt die Datenvermittlungsstelle EDS die Dauer des Bestehens der Verbindung zwischen der Teletex-Teilnehmerstelle Ttx und dem Signalumsetzer TTU1 und zeichnet die Angaben bezüglich dieser Dauer gegebenenfalls für eine spätere Gebührenermittlung (Nachverarbeitung) auf. In dem Signalumsetzer TTU1 sind nun Speicherzellen reserviert, in denen die zu übertragenden Datensignale zur Umsetzung in entsprechende Teletex-Zeichen zwischengespeichert werden. Nach Abschluss der Übertragung der genannten Datensignale von der Teletex-Teilnehmerstelle Ttx zu dem Signalumsetzer TTU1 wird die zwischen der Teletex-Teilnehmerstelle Ttx und dem Signalumsetzer TTU1 bestehende Verbindung in bekannter Weise abgebaut (c in Fig. 2).

Nach dem gerade genannten Abbau der Verbindung zwischen der Teletex-Teilnehmerstelle Ttx und dem Signalumsetzer TTU1 baut der Signalumsetzer TTU1 nunmehr eine Verbindung zu der Telex-Teilnehmerstelle Tx hin auf (d in Fig. 2). Nach einem erfolgten Aufbau beginnt der Signalumsetzer mit dem Auslesen und Umsetzen der zuvor in den Speicherzellen zwischengespeicherten Datensignale und leitet die umgesetzten Datensignale gemäss der zu verwendeten Übertragungsprozedur an die Telex-Teilnehmerstelle Tx weiter (e in Fig. 2).

Mit dem Weiterleiten der Datensignale beginnt der Signalumsetzer, die Dauer der für das Weiterleiten der Datensignale erforderlichen Zeitspanne zu ermittleln. Zur Markierung des Anfangszeitpunktes wird hierzu der Zählerstand einer in dem Signalumsetzer TTU1 befindlichen Zähleinrichtung verwendet, die entweder durch einen internen Systemtakt oder durch einen von dem Vermittlungsnetz her bereitgestellten Netztakt, z.B. den Envelopetakt, steuerbar ist. Bei diesem Ausführungsbeispiel wird der Zählerstand der genannten Zähleinrichtung im zeitlichen Abstand von 0,1 s jeweils inkrementiert. Mit dem Abschluss des Weiterleitens der genannten Datensignale ermittelt der Signalumsetzer TTU1 anhand des aktuellen Zählerstandes und des zuvor registrierten Anfangszählerstandes die Dauer, die für das Weiterleiten der Datensignale erforderlich gewesen ist, und speichert die Angaben bezüglich dieser Zeitspanne bis zur Übergabe an die Datenvermittlungsstelle EDS in einem dafür vorgesehenen Speicherbereich des Signalumsetzers. Im Anschluss daran wird die über die Datenvermittlungsstelle EDS zwischen dem Signalumsetzer TTU1 und der Telex-Teilnehmerstelle Tx bestehende Verbindung abgebaut (f in Fig. 2).

Nach dem vollständigen Abbau der zuvor genannten Verbindung wird von dem Signalumsetzer TTU1 aus erneut eine Verbindung zu der Teletex-Teilnehmerstelle Ttx aufgebaut. Diese erneut aufgebaute Verbindung dient lediglich dazu, der betreffenden Teletex-Teilnehmerstelle das ordnungsgemässe Weiterleiten der Datensignale an die Telex-Teilnehmerstelle zu quittieren (Quittungsruf). Dieser Quittungsruf ist in Fig. 2 durch die Felder g bis i angedeutet. Die Dauer des Bestehens dieser für den Quittungsruf erforderlichen Verbindung kann wiederum in der Datenvermittlungsstelle EDS in bereits dargestellter Weise ermittelt werden. Inwieweit diese Verbindungsdauer für die Gebühren erfasst wird, hängt dabei von dem jeweiligen Betreiber der Datenvermittlungsstelle bzw. von dessen Nachverarbeitungsverfahren ab. Im übrigen sei darauf hingewiesen, dass im Zuge der einzelnen zwischen dem Signalumsetzer und der Teletex-Teilnehmerstelle bzw. der Telex-Teilnehmerstelle bestehenden Verbindungen Kennungen in hier nicht näher dargestellter Weise ausgetauscht werden.

Nach Abschluss des genannten Quittungsrufes ist der Signalumsetzer TTU1 durch die Datenvermittlungsstelle EDS für weitere Umsetzvorgänge wieder belegbar. Um dieses der Datenvermittlungsstelle EDS anzuzeigen, übergibt der Signalumsetzer TTU1 ein seine Wiederbelegbarkeit kennzeichnendes Signal an diese ab. Mit diesem die Wiederbelegbarkeit des Signalumsetzers kennzeichnenden Signal werden gleichzeitig die bis dahin in dem Signalumsetzer TTU1 gespeicherten Angaben bezüglich der für das Weiterleiten der Datensignale an die Telex-Teilnehmerstelle Tx erforderlichen Zeitspanne an die Datenvermittlungsstelle EDS übergeben. Anhand dieser Angaben und anhand der zuvor in der Datenvermittlungsstelle registrierten Angaben ermittelt schliesslich die Datenvermittlungsstelle eine Gesamtverbindungsdauer und zeichnet die Angaben bezüglich dieser Dauer gegebenenfalls für eine spätere Gebührenermittlung auf. Diese Gebührenermittlung kann entweder in der Datenvermittlungsstelle selbst oder in einer speziell dafür vorgesehenen Nachverarbeitungseinrichtung erfolgen.

Es wird nun noch kurz auf den Fall eingegangen, dass Nachrichtensignale von der Telex-Teilnehmerstelle Tx aus zu der Teletex-Teilnehmerstelle Ttx hin zu übertragen sind. Hierzu wird wiederum zunächst eine Verbindung zwischen der Telex-Teilnehmerstelle Tx und z.B. dem Signalumsetzer TTU1 vorläufig aufgebaut. Im Zuge dieses Verbindungsaufbaus wird von dem Signalumsetzer aus kurzzeitig eine Verbindung zu der als Empfänger ausgewählten Teletex-Teilnehmerstelle Ttx aufgebaut. Diese Verbindung dient dabei lediglich dazu, die Erreichbarkeit der betreffenden Teletex-Teilnehmerstelle zu überprüfen. Ist diese genannte Teletex-Teilnehmerstelle erreichbar, wird die Verbindung zwischen dem Signalumsetzer und der Telex-Teilnehmerstelle Tx endgültig hergestellt. Von diesem Zeitpunkt an kann die Telex-Teilnehmerstelle Tx die zu übertragenden Datensignale an den Signalumsetzer TTU1 abgeben, wo diese zunächst für die Umsetzung zwischengespeichert werden. Die Datenvermittlungsstelle EDS ermittelt hier wiederum die Dauer der für das Einspeichern der Datensignale in dem Signalumsetzer bestehenden Verbindung.

Nach der vollständigen Übernahme der Datensignale in den Signalumsetzer baut dieser erneut eine Verbindung zu der Teletex-Teilnehmerstelle Ttx auf. Nach diesem Verbindungsaufbau erfolgt in bereits dargestellter Weise die Umsetzung und das Weiterleiten dieser Datensignale an die Teletex-Teilnehmerstelle Ttx. Während der gesamten Dauer dieser zuletzt genannten Verbindung bleibt auch die Verbindung zwischen dem Signalumsetzer TTU1 und der Telex-Teilnehmerstelle Tx erhalten. Nach dem vollständigen Weiterleiten der Datensignale an die Teletex-Teilnehmerstelle Ttx werden schliesslich die zwischen dem Signalumsetzer TTU1 und der Teletex-Teilnehmerstelle Ttx bzw. der Telex-Teilnehmerstelle Tx bestehenden Verbindungen in bekannter Weise abgebaut.

Die Dauer des Bestehens der beiden vorgenannten, zu der Teletex-Teilnehmerstelle hin bestehenden Verbindungen kann wiederum in der bereits dargestellten Weise ermittelt werden. Die Angaben bezüglich dieser Dauer können gegebenenfalls wiederum mit einem die Wiederbelegbarkeit des Signalumsetzers kennzeichnenden Signal an die Datenvermittlungsstelle EDS übergeben werden.

Abschliessend sei hier noch darauf hingewiesen, dass das Prinzip der Erfindung im Zusammenhang mit einer Datenvermittlungsanlage erläutert worden ist, die hier eine Datenvermittlungsstelle aufweist, dass aber dieses Prinzip ohne weiteres auch bei einer mehrere Datenvermittlungsstellen umfassenden Datenvermittlungsanlage anwendbar ist, bei der der Signalumsetzer zwischen zwei Datenvermittlungsstellen angeordnet ist.

## Patentansprüche

1. Verfahren zum Ermitteln der Dauer des Bestehens einer Verbindung zwischen Datensignale mit voneinander verschiedenen Datenübertragungsprozeduren abgebenden bzw. aufnehmenden Teilnehmerstellen einer Datenvermittlungsanlage (EDS), wobei die betreffenden Teilnehmerstellen (Tx, Ttx) über einen ebenfalls an der Datenvermittlungsanlage (EDS) angeschlossenen Signalumsetzer (z.B. TTU1) dadurch miteinander verbunden werden, dass zunächst während einer zwischen der einen Teilnehmerstelle (Tx bzw. Ttx) und dem Signalumsetzer (TTU1) aufgebauten Verbindung die zu übertragenden Datensignale in diesen Signalumsetzer (TTU1) eingespeichert werden und dass anschliessend nach einer entsprechenden Umsetzung die im Signalumsetzer (TTU1) gespeicherten Datensignale von diesem über die Datenvermittlungsanlage an die andere Teilnehmerstelle (Ttx bzw. Tx) weitergeleitet werden, dadurch gekennzeichnet, dass die Dauer des Bestehens einer Verbindung zwischen der jeweiligen Teilnehmerstelle (Tx bzw. Ttx) und dem Signalumsetzer (TTU1) für die Einspeicherung von Datensignalen in den betreffenden Signalumsetzer (TTU1) in der Datenvermittlungsanlage (EDS) ermittelt wird, dass die Dauer der für das Weiterleiten der im Signalumsetzer (TTU1) gespeicherten Datensignale erforderlichen Zeitspanne in dem Signalumsetzer (TTU1) ermittelt wird und dass nach dem vollständigen Weiterleiten der Datensignale vom Signalumsetzer (TTU1) an die für die Aufnahme dieser Datensignale in Frage kommende Teilnehmerstelle (Ttx bzw. Tx) Angaben bezüglich der in diesem Signalumsetzer (TTU1) für dieses Weiterleiten ermittelten Dauer an die Datenvermittlungsanlage (EDS) übertragen werden, in der aus diesen Angaben und aus den in der Datenvermittlungsanlage (EDS) bereits ermittelten Angaben eine Gesamtdauer ermittelt wird.

2. Verfahren nach Anspruch 1, dadurch gekennzeichnet, dass die Dauer der für das Weiterleiten der im Signalumsetzer (TTU1) gespeicherten Datensignale erforderlichen Zeitspanne betreffende Angaben mit einem nach diesem Weiterleiten die Wiederbelegbarkeit des Signalumsetzers kennzeichnenden Signal von dem Signalumsetzer her zu der Datenvermittlungsanlage hin übertragen werden.

3. Verfahren nach Anspruch 1 oder 2, dadurch gekennzeichnet, dass die Ermittlung der Dauer der für das Weiterleiten der in dem Signalumsetzer gespeicherten Datensignale erforderlichen Zeitspanne mit Hilfe von Taktsignalen eines internen Systemtaktes erfolgt.

4. Verfahren nach Anspruch 1 oder 2, dadurch gekennzeichnet, dass die Ermittlung der Dauer der für das Weiterleiten der in dem Signalumsetzer (TTU1) gespeicherten Datensignale erforderlichen Zeitspanne mit Hilfe von Taktsignalen eines von dem Vermittlungsnetz her bereitgestellten Netzaktes erfolgt.

## Claims

1. A method for determining the duration of the existence of a connection between subscriber stations of a data exchange (EDS), which transmit or receive, as the case may be, data signals with data transmission procedures which are different from one another, wherein the respective subscriber stations (Tx, Ttx) are connected to one another by means of a signal converter (e.g. TTU1), which is likewise connected to the data exchange (EDS), in that during a connection which is established between the one subscriber station (Tx or Ttx) and the signal converter (TTU1), the data signals which are to be transmitted are firstly stored in the signal converter (TTU1) and that following an appropriate conversion the data signals which are stored in the signal converter (TTU1) are subsequently transmitted from said signal converter (TTU1) to the other subscriber station (Ttx or Tx) by means of the data exchange, characterised in that the duration of the existence of a connection between the respective subscriber station (Tx or Ttx) and the signal converter (TTU1) for the storage of data signals in the respective signal converter (TTU1) is determined in the data exchange (EDS), that the duration of the time interval which is required for the transmission of the data signals which are stored in the signal converter (TTU1) is determined in the signal converter (TTU1), and that following the complete transmission of the data signals from the signal converter (TTU1) to the subscriber station (Ttx or Tx) which is eligible for the reception of these data signals, statements relating to the duration which is determined in this signal converter (TTU1) for the transmission, are transmitted to the data exchange (EDS), in which a total duration is determined from these statements and from the statements which have already been determined in the data exchange (EDS).

2. A method as claimed in claim 1, characterised in that statements relating to the duration of the time interval which is required for the transmission of the data signals which are stored in the signal converter (TTU1), are transmitted to the data exchange by means of a signal which emanates from the signal converter and which following the transmission marks the fact that the signal converter can be re-seized.

3. A method as claimed in claim 1 or 2, characterised in that the determination of the duration of the time interval which is required for the transmission of the data signals which are stored in the signal converter, is effected with the aid of clock pulse signals of an internal system clock pulse.

4. A method as claimed in claim 1 or 2, characterised in that the determination of the duration of the time interval which is required for the transmission of the data signals which are stored in the signal converter (TTU1), is effected with the aid of clock pulse signals of a network clock pulse which is made available by the exchange network.

## Revendications

1. Procédé pour déterminer la durée de l'existence d'une liaison entre des postes d'abonnés d'une installation de commutation de données (EDS), qui délivrent ou reçoivent des signaux de données selon des procédures différentes de transmission de données, selon lequel les postes d'abonnés (Tx, Ttx) concernés sont reliés entre eux par l'intermédiaire d'un convertisseur de signaux (par exemple TTU1) raccordé également à l'installation (EDS) de commutation de données, de telle sorte que tout d'abord pendant une liaison établie entre un poste d'abonné (Tx ou Ttx) et le convertisseur de signaux (TTU1), les signaux de données devant être transmis sont mémorisés dans ce convertisseur de signaux (TTU1) et qu'ensuite, après une conversion correspondante, lesdits signaux de données mémorisés dans le convertisseur de signaux (TTU1) sont retransmis par ce dernier, par l'intermédiaire de l'installation de commutation de données, à l'autre poste d'abonné (Ttx ou Tx), caractérisé par le fait que la durée de l'existence d'une liaison entre le poste respectif d'abonné (Tx ou Ttx) et le convertisseur de signaux (TTU1) est déterminée par la mémorisation de signaux de données dans le convertisseur de signaux (TTU1) considéré dans l'installation (EDS) de commutation de données, que la durée de l'intervalle de temps, nécessaire pour la retransmission des signaux de données mémorisés dans le convertisseur de signaux (TTU1), est déterminée dans ce convertisseur de signaux (TTU1) et qu'après la rentransmission complète des signaux de données depuis le convertisseur de signaux (TTU1) au poste d'abonné (Ttx ou Tx) entrant en jeu pour la réception de ces signaux de données, des indications concernant la durée déterminée dans ce convertisseur de signaux (TTU1) pour cette retransmission sont transmises à l'installation (EDS) de commutation de données, dans laquelle une durée globale est déterminée à partir de ces indications et à partir des indications déjà déterminées dans l'installation (EDS) de commutation de données.

2. Procédé suivant la revendication 1, caractérisé par le fait que des indications concernant la durée de l'intervalle de temps nécessaire pour la retransmission des signaux de données mémorisées dans le convertisseur de signaux (TTU1) sont transmises, avec un signal caractérisant, après cette retransmission, la capacité de réoccupation du convertisseur de signaux, depuis le convertisseur de signaux en direction de l'installation de commutation de données.

3. Procédé suivant la revendication 1 ou 2, caractérisé par le fait que la détermination de la durée de l'intervalle de temps nécessaire pour la retransmission des signaux de données mémorisées dans le convertisseur de signaux s'effectue à l'aide d'une cadence interne au système.

4. Procédé suivant la revendication 1 ou 2, caractérisé par le fait que la détermination de la durée de l'intervalle de temps nécessaire pour la retransmission des signaux de données mémorisées dans le convertisseur de signaux (TTU1) s'effectue à l'aide de signaux d'une cadence du réseau fournie par le réseau de commutation.

# FIG 1

# FIG 2

a      b      c            g      i

Nachrichtensignale

Verb.-Aufbau     Verb.-Abbau         Verb.-Aufbau   Verb.-Abbau

Zeitmessung in EDS      Ttx → TTU1

a          c         g    h    i      k

Verb.-Aufbau     Verb.-Abbau      Verb.-Aufbau   Quittung   Freigabe+Zeitangaben an EDS

Verb.-Abbau    TTU1 → Ttx (EDS)

d      e      f

Verb.-Aufbau   Nachrichtensignale   Verb.-Abbau

TTU1 → Tx

Zeitmessung im TTU1

d      f

Verb.-Aufbau     Verb.-Abbau

Tx → TTU1

0 088 310